# EUROPÄISCHE PATENTSCHRIFT

(11) **EP 2 963 444 B1**
(45) Veröffentlichungstag und Bekanntmachung des Hinweises auf die Patenterteilung: **28.08.2019**
(21) Anmeldenummer: 14175631.2
(22) Anmeldetag: 03.07.2014
(51) Int. Cl.: G01S 17/02

(54) **Sensor und Verfahren zur ortsgenauen Detektion eines relativ zum Sensor in einer Förderrichtung geförderten Objekts**
Sensor and method for precise detection of an object conveyed relative to the sensor in a direction of travel
Capteur et procédé de détection à un endroit précis d'un objet transporté dans une direction de transport, par rapport à un capteur

(43) Veröffentlichungstag der Anmeldung: 06.01.2016
(73) Patentinhaber: SICK AG, 79183 Waldkirch (DE)
(72) Erfinder: Merettig, Gerhard, 79350 Sexau (DE); Bergbach, Roland, 79364 Malterdingen (DE); Hörsch, Dr. Ingolf, 79102 Freiburg (DE)
(74) Vertreter: Ludewigt, Christoph

(56) Entgegenhaltungen:
- EP-A1- 0 685 748
- EP-A1- 1 816 488
- US-A1- 2002 024 677

## Beschreibung

Die Erfindung betrifft einen Sensor zur ortsgenauen Detektion eines relativ zum Sensor in eine Förderrichtung geförderten Objekts.

Dabei liegt das allgemeine Problem zugrunde, dass in einigen Applikationen optischer Sensoren die Position eines seitlich einfahrenden Objektes sehr präzise bekannt sein muss, damit weitere Verarbeitungsschritte mit möglichst geringer Toleranz durchgeführt werden können. Beispiele hierfür sind das Befüllen eines Flüssigkeitsbehälters mit kleiner Öffnung oder das Positionieren eines Objekts, damit ein Roboterarm dieses Objekt exakt greifen kann oder das Applizieren eines Objekts auf einem anderen.

Bei seitlich in den Taststrahl des optischen Sensors einfahrenden Objekten, also bei Förderung von Objekten an dem Sensor vorbei, treten vielerlei Probleme auf, die bei heutigen Sensoren zu einem Schalten an unterschiedlichen Objektpositionen führen. Die Objektposition, an der der Sensor das Objekt detektiert, kann abhängig sein von:
- der Geschwindigkeit der Objekte (z.B. Förderbandgeschwindigkeitsschwankungen);
- Helligkeit des Objekts (Reflexionsgrad);
- Helligkeit des Hintergrunds (Reflexionsgrad des Hintergrundes);
- Abstand des Objekts zum Sensor;
- Abstand des Objekts von einem eingestellten Schaltabstand des Sensors;
- Abstand des Hintergrunds von dem eingestellten Schaltabstand;
- Mehrbitverarbeitung und Rahmenfrequenz des Sensors;
- Verschmutzungsgrad der Optik (Frontscheibe).

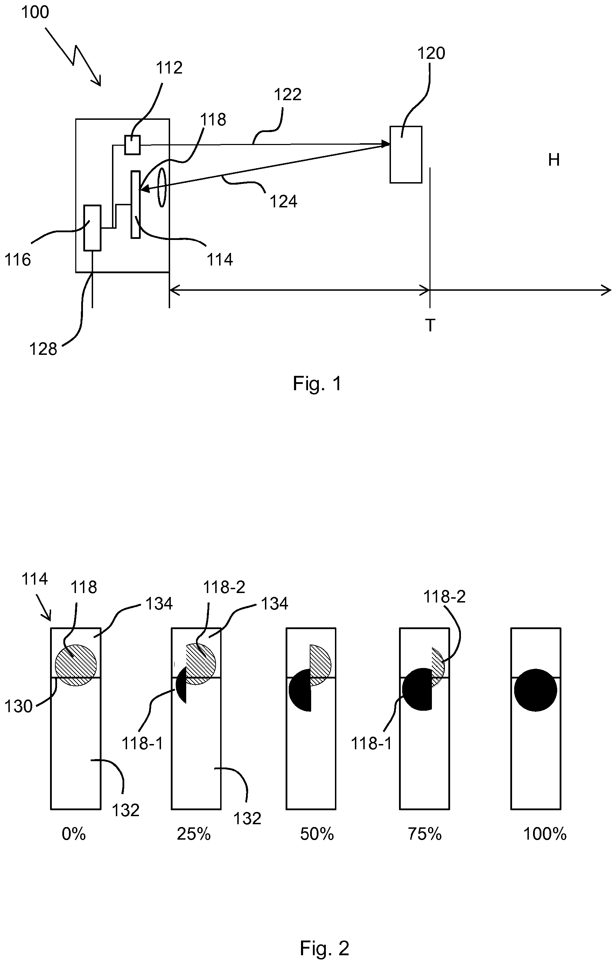

Die Probleme sollen am Beispiel eines aus dem allgemeinen Stand der Technik bekannten Triangulationslichttasters mit Hintergrundausblendung erläutert werden. Ein solcher Lichttaster 100 ist in Fig. 1 schematisch dargestellt und weist einen Lichtsender 112 auf, der einen Sendelichtstrahl 122 emittiert. Der Sendelichtstrahl 122 definiert einen Erfassungsbereich und wird an einem Objekt 120 innerhalb einer Tastweite T oder wenn das Objekt nicht vorhanden ist, möglicherweise an einem Hintergrund remittiert, zumeist diffus zurückgestreut. Als Hintergrund H werden alle Reflexionen aus einer Distanz größer T bezeichnet. Das rückgestreute Licht 124 wird mit einem zumindest in Triangulationsrichtung ortsauflösenden Empfänger 114 empfangen. Aus der Lage des Schwerpunkts eines Empfangslichtspots 118 auf dem Empfänger 114 kann mit Hilfe der Triangulation auf die Entfernung der Reflexion, also des Objekts 120, zurückgeschlossen werden. Befindet sich ein Objekt 120 innerhalb der Tastweite T wird an einem Ausgang 128 einer Auswerteeinheit 116 ein Objektfeststellungssignal ausgegeben. Die Tastweite T ist damit definiert über die Lage eines sogenannten Trennstegs 130, der den Empfänger in einen Nahbereich 132 und einen Fernbereich 134 teilt.

Wenn kein Objekt innerhalb der Tastweite vorhanden ist, fällt entweder keinerlei Empfangslicht auf den Empfänger 114 oder bestenfalls eine Reflektion aus dem Hintergrund H, wobei der Schwerpunkt eines solchen Hintergrundsignals im Fernbereich 134 liegt. In der Realität befinden sich im Hintergrund meistens Objekte (Maschinenteile, Gebäudewände, vorbeigehende Personen etc.), so dass man immer von einem eigentlich störenden Hintergrundsignal ausgehen muss.

Tritt nun ein Objekt 120 seitlich in den Tastbereich (Erfassungsbereich innerhalb der Tastweite), so verschiebt sich der Empfangslichtspot 118 vom Fernbereich 134 in den Nahbereich 132. Wenn der Schwerpunkt des Empfangslichtspots 118 schließlich im Nahbereich 132 liegt und also den Trennsteg 130 überschritten hat, erfolgt die Ausgabe des Objektfeststellungssignals.

Dieser Übergang erfolgt nicht digital, sondern aufgrund des ausgedehnten Empfangslichtspots allmählich mit Einfahren des Objekts 120 in den Sendelichtstrahl 122, wie in Fig. 2 schematisch dargestellt. In Fig. 2 sind in den einzelnen Bildern die Empfangslichtspots 118 dargestellt in Abhängigkeit der Objektposition. Dabei sind die Bilder mit Prozentangaben gekennzeichnet, wobei 0% bedeutet, dass das Objekt noch nicht vom Sendelichtstrahl 122 getroffen ist und 100% dass das Objekt so weit eingefahren ist, dass der gesamte Sendelichtstrahl 122 trifft. Entsprechendes gilt für die Positionen dazwischen.

Wenn also noch kein Objekt vorhanden ist (Bild 0%), dann liegt der Schwerpunkt des Empfangslichtspots 118 im Fernbereich. Fährt das Objekt 120 innerhalb der Tastweite ein Stück weit in den Sendelichtstrahl 122 seitlich ein, trifft zunächst nur ein kleiner Teil des Sendelichtstrahls 122 das Objekt 120. Dieser Teil wird dann entsprechend der Entfernung des Objekts 120 an anderer Stelle auf dem Empfänger 114 abgebildet. In Bild 25% der Fig. 2 ist dieser Teil mit 118-1 gekennzeichnet und ist entsprechend der Entfernung Objekt-Sensor auf dem Empfänger 114 gegenüber dem Lichtspot 118-2, der von Licht aus dem Hintergrund stammt, verschoben. Fährt das Objekt 120 weiter ein, dann wird der Teil 118-1 des Sendelichtstrahls 122, der das Objekt 120 trifft, immer größer. In Bild 50% ist die Situation dargestellt, wenn die Hälfte des Sendelichtstrahls 122 das Objekt 120 trifft. Schließlich ist das Objekt 120 so weit eingefahren, dass alles Sendelicht 122 das Objekt 120 trifft. Spätestens dann liegt der Schwerpunkt des Empfangslichtspots auf jeden Fall im Nahbereich 132 und das Objektfeststellungsignal kann ausgegeben werden.

Handelt es sich beispielsweise um einen weißen Hintergrund und ein schwarzes Objekt, so ist die Energie des vom Objekt reflektierten Lichts um ein Vielfaches geringer als die des Hintergrunds. In einer solchen Situation kann z.B. auch bei der 75%-Position auf dem Fernbereich 134 noch mehr Energie empfangen werden als auf dem Nahbereich 132. Das Objekt wird dann beispielsweise erst bei 80% erkannt. Und das womöglich auch nur, weil ein Teil des Hintergrundsignals in diesem Beispiel auf den Nahbereich 132 fällt. Ist das Hintergrundsignal komplett auf dem Fernbereich und das Objekt noch teilweise auf den Fernbereich abgebildet, so kann es sein, dass das Objekt zu noch mehr Prozent (z.B. mehr 95%) eingefahren sein muss, bevor der Sensor das Objekt erkennt.

In einer anderen Situation ist z.B. kein Hintergrundsignal vorhanden und zusätzlich ist das Objekt 120 ein helles Objekt oder vielleicht sogar spiegelnd ausgebildet. Dann wird bereits das Objektfeststellungssignal ausgegeben, wenn nur ein kleiner Teil des Sendelichtstrahls das Objekt 120 trifft, also wenn das Objekt in der 25%-Position ist oder noch eher. In der Praxis schalten Sensoren in einer solchen Situation sogar noch bevor das mit dem Auge erkennbare Kernlicht des Sendelichtstrahls 122 auf das Objekt 120 fällt, denn jede reale optische Grenzfläche streut auch Licht. Dadurch wird nicht der erwartete ideale Kreis wie in Fig. 2 auf dem Empfänger abgebildet, sondern ein aufgeweiteter Spot. Dies wird noch verstärkt wenn eine Fläche, beispielsweise eine Frontscheibe des Sensors 100, verschmutzt ist. Führt man nun ein Objekt in die Nähe des sichtbaren Lichtflecks, so können Randstrahlen ausreichen, um ein Schaltsignal zu erzeugen.

Es wird also je nach Applikation ein Objektfeststellungssignal zu verschiedenen Objektpositionen ausgegeben.

Aus dem Stand der Technik ist es bekannt, zur präziseren Ortsdetektion einen möglichst kleinen Lichtfleck des Lichtsenders des optischen Sensors vorzusehen, weshalb oft ein Sensor mit Laserstrahl eingesetzt wird. Auch bei Geräten mit LEDs wird versucht, immer kleinere Lichtflecken zu erzeugen, um die Präzision zu erhöhen. Auch wenn die Präzision durch verkleinerte Lichtflecke zunimmt, variiert die Schaltposition immer noch und insbesondere wird eine Geschwindigkeitsvarianz und eine Verschmutzungsabhängigkeit nicht gelöst. Nachteilig ist zudem, dass, bedingt durch die in der Laser-Norm zulässige maximale Bestrahlungsstärke, die Strahlungsenergie reduziert werden muss.

Aus der DE 10 2010 022 273 A1 ist ein optischer Sensor bekannt, der eine präzise Detektion der Objektkante ermöglicht, auch wenn zwischen den Objekten keine Lücke vorhanden ist. Das Verfahren ist darauf aufgebaut, dass sowohl in der Beleuchtung des Objekts als auch beim Signalempfang geometrisch differenzierte Signale verwendet werden. Die Lösung erzeugt eine präzise Detektion, erfordert aber einen sehr hohen Realisierungsaufwand.

Aus der US 2002/0024677 A1 ist die Vermessung von Holzbrettern mittels Lasertriangulation bekannt. Laserlicht in Form von Punkten oder Linien wird auf an einer Messstation vorbeibewegte Objekte gerichtet, und die Reflexionen werden von mehreren Kameras beobachtet. Aus der Verschiebung der Reflexionen im Bild der Kameras und mit Kenntnis der geometrischen Anordnung von Lichtqelle und Kamera lassen sich die Abmessungen der Bretter bestimmen. In einer Ausführungsform werden mehrere Lichtstrahlen eingesetzt, die in Förderrichtung (Y-Richung) alle auf gleicher Höhe nebeneinander liegen.

Aus der EP 0 685 748 A1 ist ein Lichttaster mit Hintergrundausblendung bekannt.

Ausgehend von diesem Stand der Technik ist es Aufgabe der Erfindung, ein Verfahren und einen optischen Sensor zur verbesserten ortsgenauen Detektion eines relativ zum Sensor in eine Förderrichtung geförderten Objekts bereitzustellen.

Diese Aufgabe wird gelöst durch ein Verfahren nach Anspruch 1 und einen Sensor nach Anspruch 9.

Das erfindungsmäße Verfahren zur ortsgenauen Detektion eines relativ zu einem Sensor in eine Förderrichtung geförderten Objekts innerhalb einer Tastweite umfasst die Schritte:
- Fördern des Objekts durch einen Detektionsbereich des Sensors und während des Förderns wiederholtes Durchführen folgender Schritte an einer aktuellen Objektposition in Förderrichtung:
- Erzeugen von Sendelicht bestehend aus drei Sendelichtstrahlen, die derart angeordnet bzw. ausgerichtet sind, dass bei Fördern des Objekts das Objekt zunächst vom ersten, dann vom zweiten und schließlich vom dritten Sendelichtstrahl getroffen wird,
- Reflektieren des Sendelichts an dem geförderten Objekt oder bei Nichtvorhandensein des Objekts gegebenenfalls an einem Hintergrund,
- Erfassen der den Sendelichtstrahlen zugeordneten Reflexionen des Lichts als Empfangslichtspots und Erzeugen von den Sendelichtstrahlen zugeordneten ersten, zweiten und dritten Empfangssignalen mit wenigstens einem Empfänger,
- Verknüpfen der ersten und dritten Empfangssignale zu einem Verknüpfungsergebnis,
- Vergleichen des Verknüpfungsergebnisses mit dem zweiten Empfangssignal oder einem aus dem zweiten Empfangssignal abgeleiteten Wert zu einem Vergleichsergebnis,
- Ausgeben eines Objektfeststellungssignals, wenn das Vergleichsergebnis einen Schwellwert über- oder unterschreitet.

Die besonderen Vorteile des erfindungsgemäßen Verfahrens sind eine sehr exakte und reproduzierbare Detektion einer Objektkante unabhängig von Objekteigenschaften, von der Sendestrahlform, von Streulicht oder von gewählten Einstellparametern. Nachfolgende Prozessschritte können genauer angesteuert und insgesamt ein Produktionsprozess dadurch schneller ablaufen.

Fehldetektionen, die daher rühren, dass der Sensor in bestimmten Situationen schon bei geringen Signalpegeln schalten würde, werden sicher vermieden.

In einer vorteilhaften Weiterbildung der Erfindung arbeitet der Sensor nach dem Triangulationsverfahren. Dabei werden die drei Empfangslichtspots jeweils in eine Triangulationsrichtung ortsaufgelöst erfasst, so dass ein Empfangssignal einem Nahbereich zugeordnet wird, wenn es von einer Reflexion innerhalb einer Tastweite stammt und einem Fernbereich zugeordnet wird, wenn es von einer Reflexion außerhalb der Tastweite stammt, so dass jedem Empfangslichtspot ein Nahbereichsempfangssignal und ein Fernbereichsempfangssignal zugeordnet sind. Die ersten und dritten Nahbereichsempfangssignale werden zu einem Nahbereichsverknüpfungsergebnis und die ersten und dritten Fernbereichsempfangssignale zu einem Fernbereichsverknüpfungsergebnis verknüpft. Diese beiden Ergebnisse werden schließlich zu einem Gesamtverknüpfungsergebnis verknüpft. Weiter ist in dieser Ausbildung der aus dem zweiten Empfangssignal abgeleitete Wert eine Differenz zwischen dem zweiten Nahbereichs- und dem zweiten Fernbereichsempfangssignal.

Mit diesem Verfahren kann man das Verfahren und den Sensor für eine Vielzahl in fast jeder Applikation einsetzen. Es ist dann egal, ob der Hintergrund ein stärkeres oder geringeres Signal als das Objekt im Vordergrund liefert. Ebenso ist das Verfahren tolerant gegenüber der Schärfe und Ausdehnung der Empfangslichtspots. Auch wenn ein Empfangslichtspot sowohl auf dem Nah- als auch auf dem Fernbereich liegt, liefert das Verfahren ein immer gleich exaktes Objektfeststellungschaltsignal, also immer an der gleichen Objektposition wird das Objekt erkannt. Auch ist das Verfahren tolerant gegenüber Überlappungen der Empfangslichtspots. Diese dürfen sich bereichsweise überlappen, was aufgrund der in der Regel vorliegenden Gaußverteilung der Lichtintensität in einem Lichtstrahl häufig der Fall ist.

Dabei ist es besonders vorteilhaft, weil einfach zu berechnen, wenn das Nahbereichsverknüpfungsergebnis und das Fernbereichsverknüpfungsergebnis jeweils Mittelwertbildungen sind und diese mittels Differenzbildung zu dem Gesamtverknüpfungsergebnis führen.

Um ein sicheres und definiertes Schalten des Sensors zu erhalten, also zu jeder Zeit ein definiertes Objektfeststellungssignal zu haben, ist es vorteilhaft, wenn eine Objektfeststellungssignalschalthysterese vorgesehen ist. Dazu wird der Schwellwert abhängig vom Vorzeichen des Vergleichsergebnisses gelegt.

Gemäß der Erfindung werden Empfangslichtspots und damit Empfangsenergieschwerpunkte erfasst, wobei diese dem einen oder anderen Sendlichtstrahl zugeordnet sind. Diese Zuordnung kann durch zeitliche Vorgaben gegeben sein, also z.B. dadurch, dass zu einer Zeit immer nur einer der Sendelichtstrahlen ausgesendet wird und die Sendelichtstrahlen wechselweise ausgesandt werden. Die Zuordnung kann alternativ aber auch örtlich erfolgen, indem der Empfänger auch senkrecht zur Triangulationsrichtung den Auftreffpunkt des Empfangslichtspots auflösen kann. Dann könnten die Sendelichtstrahlen auch gleichzeitig ausgesandt werden.

Durch eine Gewichtung der einzelnen Empfangssignale ist es auch möglich, den Schaltpunkt in gewissen Grenzen geometrisch einzustellen. Das bedeutet, dass man dadurch den Objektfeststellungszeitpunkt genau an eine bestimmte Position an der Objektkante legen kann, z.B. genau zwischen die beiden Sendelichtstrahlen oder etwas außermittig.

Damit lässt sich auch zusätzlich eine geometrische Hysterese einstellen, indem die Gewichtung abhängig von dem Schaltzustand (also ob das Objekt einfährt oder ausfährt) umgeschaltet wird, indem die Gewichtung abhängig vom Vorzeichen des Vergleichsergebnisses (Schaltzustand) gemacht wird.

Ebenso wird die Aufgabe gelöst durch einen Sensor zur Durchführung eines Verfahrens zur ortsgenauen Detektion eines relativ zum Sensor in eine Förderrichtung geförderten Objekts. Dieser Sensor umfasst:
- eine Lichtsendevorrichtung zum Erzeugen von Sendelicht bestehend aus drei Sendelichtstrahlen, deren optische Achsen in Förderrichtung einen Abstand haben, so dass bei Fördern des Objekts das Objekt zunächst vom ersten, dann vom zweiten und schließlich vom dritten Sendelichtstrahl getroffen wird,
- einem Empfänger zum Erfassen von Reflexionen des Sendelichts an dem geförderten Objekt oder bei Nichtvorhandensein des Objekts gegebenenfalls an einem Hintergrund, und zum Erfassen der den Sendelichtstrahlen zugeordneten Reflexionen des Lichts als Empfangslichtspots und Erzeugen von den Sendelichtstrahlen zugeordneten ersten, zweiten und dritten Empfangssignalen,
- eine Auswerteeinheit mit
- ersten Mitteln zum Verknüpfen der ersten und dritten Empfangssignale zu einem Verknüpfungsergebnis,
- mit zweiten Mitteln zum Vergleichen des Verknüpfungsergebnisses mit dem zweiten Empfangssignal oder einem aus dem zweiten Empfangssignal abgeleiteten Wert zu einem Vergleichsergebnis,
- einen Ausgang zum Ausgeben eines Objektfeststellungssignals, wenn der Vergleich einen Schwellwert über- oder unterschreitet.

Vorteilhafterweise ist der Sensor als Triangulationssensor ausgebildet und der Empfänger die drei Empfangslichtspots jeweils in eine Triangulationsrichtung ortsaufgelöst erfasst, so dass ein Empfangssignal einem Nahbereich zugeordnet wird, wenn es von einer Reflexionen innerhalb einer Tastweite stammt und einem Fernbereich zugeordnet wird, wenn es von einer Reflexion außerhalb der Tastweite stammt, so dass jedem Empfangslichtspot ein Nahbereichsempfangssignal und ein Fernbereichsempfangssignal zugeordnet sind, und dass die ersten Mittel ausgebildet sind, die ersten und dritten Nahbereichsempfangssignale zu einem Nahbereichsverknüpfungsergebnis und die ersten und dritten Fernbereichsempfangssignale zu einem Fernbereichsverknüpfungsergebnis zu verknüpfen und diese zu einem Gesamtverknüpfungsergebnis zu verknüpfen, und Mittel aufweist zum Erzeugen des aus dem zweiten Empfangssignal abgeleiteten Wertes, der eine Differenz zwischen dem zweiten Nahbereichs- und dem zweiten Fernbereichsempfangssignal ist.

Der Empfänger ist vorteilhafterweise als Fotodiodenzeile ausgebildet.

Wenn der Empfänger als zweidimensionales Lichtempfangsarray ausgebildet ist, kann die Zuordnung Sendelichtstrahl - Empfangslichtspot auch geometrisch erfolgen

Für den Augenschutz und zur Leistungserhöhung ist in Weiterbildung der Erfindung die Lichtsendevorrichtung gepulst betreibbar und der Abstand zwischen Sendelichtpulsen ist variabel.

Vorteilhafterweise weist die Lichtsendevorrichtung und der Empfänger je einen Polarisationsfilter auf, deren Polarisationsrichtungen gegeneinander um 90° verdreht sind. Dadurch kann insbesondere bei stark reflektierenden Objekten vermieden werden, dass eine Spiegelung im Randbereich eines Objekts zu Schwankungen der Schaltposition führt.

Im Folgenden wird die Erfindung anhand von Ausführungsbeispielen unter Bezugnahme auf die Zeichnung im Einzelnen erläutert. In der Zeichnung zeigen:
- Fig. 1: eine Darstellung eines Triangulationstasters nach dem Stand der Technik;
- Fig. 2: Darstellungen des Lichtempfängers mit darauf abgebildeten Empfangslichtspots des Lichttasters aus Fig. 1 bei verschiedenen Objektpositionen;
- Fig. 3: eine schematische Darstellung einer ersten Ausführungsform eines erfindungsgemäßen Sensors;
- Fig. 4A und B: schematische Darstellungen zweier Ausführungsformen des Sensors aus Fig. 3 in einer Draufsicht;
- Fig. 5: schematische Darstellungen eines Lichtempfängers des Sensors aus Fig. 3 mit darauf abgebildeten Empfangslichtspots bei verschiedenen Objektpositionen;
- Fig. 6 und 7: Diagramme der Energie von Empfangslichtspots auf dem Empfänger versus Objektposition;
- Fig. 8: eine schematische Darstellung einer weiteren Ausführungsform des erfindungsgemäßen Sensors;
- Fig. 9A und B: schematische Darstellungen zweier Ausführungsformen des Sensors aus Fig. 8 in einer Draufsicht;
- Fig. 10: schematische Darstellungen des Lichtempfängers des Sensors aus Fig. 8 mit darauf abgebildeten Empfangslichtspots bei verschiedenen Objektpositionen;
- Fig. 11: eine Darstellung einer Ausführungsform des Empfängers des Sensors aus Fig. 8;
- Fig. 12, 14, 16: schematische Diagramme der Energie und Energiedifferenzen von Empfangslichtspots auf dem Empfänger versus Objektposition;
- Fig. 13, 15, 17: schematische Darstellungen von Verknüpfungsergebnissen und abgeleiteten Werten aus den Energien der Empfangslichtspots versus Objektposition;
- Fig. 18: eine Darstellung wie Fig. 13, 15 oder 17 mit Schwellen für eine Hysterese;
- Fig. 19: eine Darstellung wie Fig. 13, 15 oder 17 mit verschieden gewichteten, abgeleiteten Werten aus den Energien der Empfangslichtspots zur Bildung einer Hysterese.

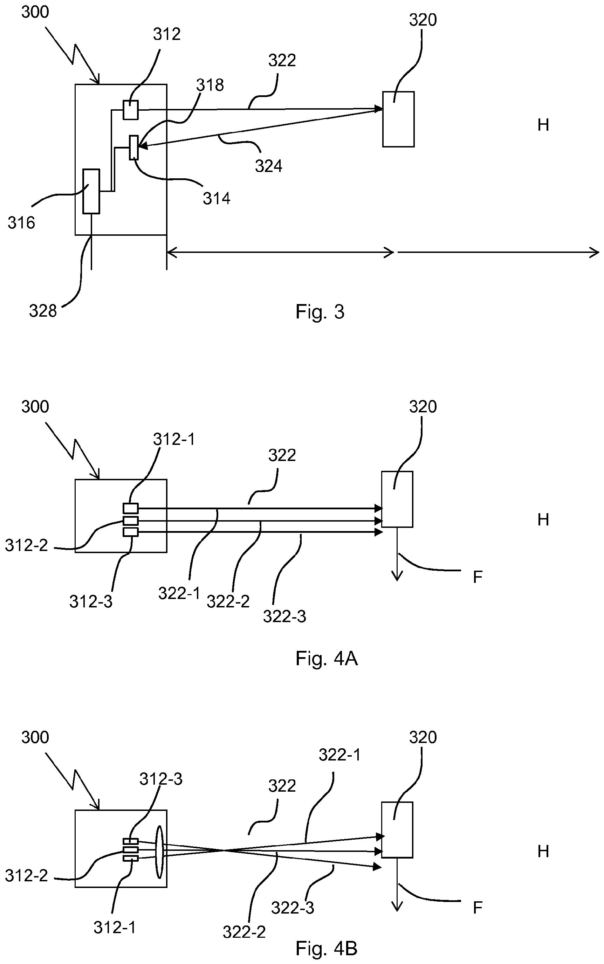

Fig. 3 zeigt eine erste Ausführungsform des erfindungsgemäßen Sensors 300. Der Sensor 300 ist als energetischer Lichttaster ausgebildet. Er weist eine Lichtsendevorrichtung 312 auf, die Sendelicht 322 aussendet, das von einem Objekt 320 im durch das Sendelicht definierten Detektionsbereich reflektiert bzw. remittiert wird. Ein Empfänger 314 erfasst die Reflexionen des Sendelichts 322 als Empfangslicht 324. In der Auswerteeinheit 316 werden die Empfangssignale ausgewertet und an einem Ausgang 328 in Abhängigkeit des Auswerteergebnisses ein Objektfeststellungssignal ausgegeben. Ein Objektfeststellungssignal wird dann ausgegeben, wenn sich ein Objekt 320 im Detektionsbereich befindet, wenn also die auf dem Empfänger empfangene Lichtenergie eine Schwelle überschreitet. Ein solcher energetischer Lichttaster ist dann vorteilhaft einsetzbar, wenn ein Signal aus dem Hintergrund H immer kleiner ist als ein Vordergrundsignal, also kleiner als das Reflexionssignal von dem Objekt 320.

Der erfindungsgemäße Sensor 300 ist meist an einer nicht dargestellten Fördereinrichtung installiert und detektiert das in den Detektionsbereich in Förderrichtung F einfahrende Objekt 320 und in gleicher Weise detektiert der Sensor 300, wenn das Objekt 320 wieder aus dem Detektionsbereich heraus gefördert wird.

Das Sendelicht 322 des erfindungsgemäßen Sensors 300 umfasst drei Sendelichtstrahlen 322-1, 322-2 und 322-3, die derart angeordnet bzw. ausgerichtet sind, dass sie das Objekt 320 an drei in Förderrichtung F beabstandeten Positionen treffen. Das kann dadurch realisiert sein, dass die optischen Achsen der Sendelichtstrahlen 322-1, 322-2 und 322-3 im Wesentlichen parallel verlaufend in Förderrichtung F einen Abstand haben, wie in Fig. 4A zu erkennen ist. Es kann aber auch dadurch realisiert sein, dass die Mittelpunktstrahlen der Sendelichtstrahlen konvergent oder divergent emittiert werden, so dass die Auftreffpunkte der Sendelichtstrahlen bei einem ausreichenden Abstand des Objekts 320 zum Sensor 300, wieder einen Abstand haben, wie in Fig. 4B schematisch dargestellt. Dazu umfasst die Lichtsendevorrichtung 312 drei Lichtsender 312-1, 312-2 und 312-3, die beispielsweise als LED ausgebildet sein können. Aufgrund der beschriebenen Anordnung bzw. Ausrichtung der Sendelichstrahlen in Förderrichtung F trifft bei Fördern eines Objekts 320 zunächst der erste Sendelichtstrahl 322-1 das Objekt, danach der zweite 322-2 und schließlich der dritte Sendelichtstrahl 322-3. Der Detektionsbereich ist hier also durch die drei Sendelichtstrahlen 322-1, 322-2 und 322-3 definiert. Weitere Ausführungsformen der Anordnung der Sendelichtstrahlen sind denkbar.

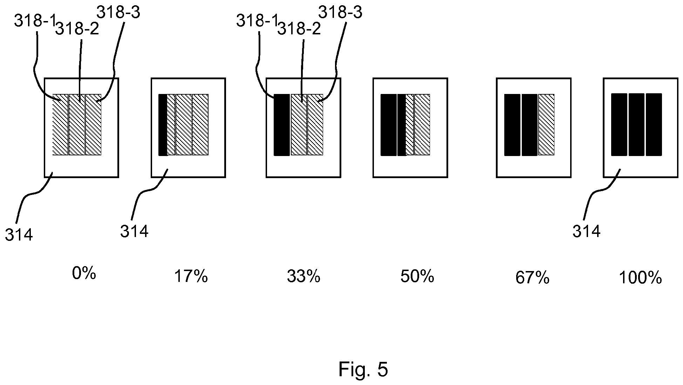

Die Abfolge, wenn dass Objekt 320 in den Detektionsbereich einfährt, ist anhand einzelner Bilder in Fig. 5 schematisch dargestellt. Die einzelnen Bilder zeigen die Empfangslichtspots 318-1, 318-2 und 318-3 auf dem Empfänger 314 in Abhängigkeit der Objektposition, also wie weit des Objekt 320 in den Detektionsbereich eingefahren ist. Dabei sind die Bilder wiederum mit Prozentangaben gekennzeichnet.

Die in Fig. 5 dargestellten Empfangslichtspots 318-1, 318-2 und 318-3 sind rechteckig dargestellt. Diese Form ist bevorzugt und dient auch der vereinfachten Darstellung und Erläuterung. In der Realität können die Lichtspots andere Formen, insbesondere runde Formen, aufweisen. Die Sendelichtstrahlen 322-1, 322-2 und 322-3 grenzen bevorzugt aneinander, wie dies auch die Fig. 5 zeigt. Sie können sich aber auch teilweise überlappen, was streng genommen in der Realität aufgrund der meistens vorliegenden Gaußverteilung auch der Fall ist. Das ändert nichts an der Funktion des Sensors 300.

Wenn also noch kein Objekt 320 vorhanden ist (Bild 0%), dann trifft nur (schwaches) Hintergrundlicht auf den Empfänger, was durch die schraffierte Fläche angedeutet ist. Fährt das Objekt 320 nun in Förderrichtung F zur Hälfte in den ersten Sendelichtstrahl 322-1 seitlich ein dann trifft die Hälfte des ersten Sendelichtstrahls 322-1 das Objekt 320. Insgesamt wird das Objekt 320 zu 1/6-tel, also zu etwa 17%, von dem Sendelicht 322 getroffen (Bild 17%). Dann ist die Intensität der einen Hälfte des ersten Empfangslichtspots 318-1 erhöht, was durch die schwarze Fläche angedeutet ist. In Bild 33% der Fig. 5 trifft bereits der gesamte erste Sendelichtstrahl 322-1 das Objekt 320 und der Empfangslichtspot 318-1 ist schwarz dargestellt. Fährt das Objekt 320 weiter in Förderrichtung F ein, dann wird der Teil des Sendelichts 322, der das Objekt 320 trifft, immer größer. In Bild 67% ist die Situation dargestellt, wenn der erste und zweite Sendelichtstrahl 322-1 und 322-2 das Objekt 320 treffen. Schließlich ist das Objekt 320 so weit eingefahren, dass alles Sendelicht 322 das Objekt 320 trifft und alle drei Empfangslichtspots 318-1, 318-2 und 318-3 haben hohe Intensität (schwarze Fläche).

Die Erfindung geht davon aus, dass die einzelnen Empfangslichtspots 318-1, 318-2 bzw. 318-3 jeweils den Sendelichtstrahlen 322-1, 322-2 bzw. 322-3 zugeordnet sind. Dies ist geometrisch und anhand der Figuren leicht zu erkennen. Damit auch die Auswertung diese Zuordnung machen kann, wenn der Empfänger 314 eine einfache Fotodiode ist, werden die drei Lichtsender 312-1, 312-2 und 312-3 bevorzugt gepulst und zeitversetzt betrieben, so dass immer nur einer der drei Sender aktiv ist, während die beiden anderen nicht aktiv sind. Die Steuerung der Sender und Zuordnung zu den Empfangssignalen übernimmt die Auswerteeinheit 316. Alternativ könnte der Empfänger auch als Fotodiodenarray ausgebildet sein, so dass die Trennung der Lichtstrahlen und Zuordnung zu den Empfangssignalen geometrisch erfolgen kann. Dann dürften die Empfangslichtspots 318-1, 318-2 und 318-3 sich aber nicht überlappen. Es ist sogar denkbar, die drei Lichtstrahlen mit nur einem Lichtsender und einem Fotodiodenarray zu definieren. Der Lichtsender würde immer das Fotodiodenarray überstrahlen und die Lichtstrahlen wären dadurch definiert, welche der Fotodioden des Arrays aktiv sind. Dann wäre nämlich ein Lichtstrahl jeweils durch die Strecke "Lichtsender - aktivierte Fotodioden" definiert. Durch nacheinander Aktivieren verschiedener Fotodioden würde man die drei unterschiedlichen Lichtstrahlen erhalten. Auch ist es denkbar, dass die Fotodioden permanent "aktiviert" sind, aber getrennt ausgelesen werden können. Dann sind die drei Lichtstrahlen durch die Strecke "Lichtsender - ausgelesene Fotodioden" definiert.

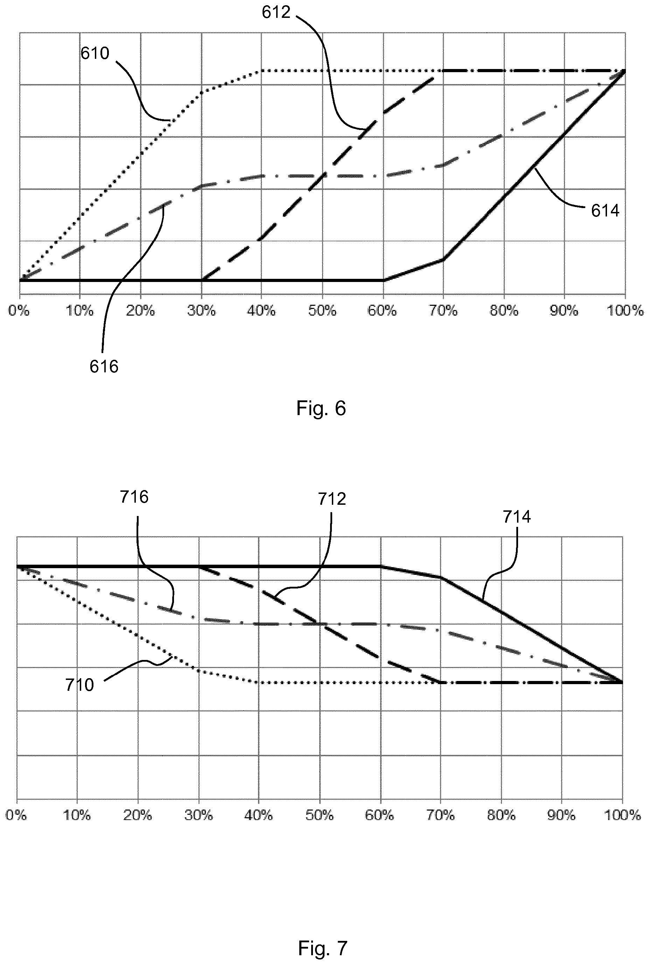

Der erfindungsgemäße Sensor 300 arbeitet nun wie nachfolgend an dem Diagramm 6 erläutert. Fig. 6 zeigt jeweils die Energie der einzelnen Empfangslichtspots des auf den Empfänger auftreffenden Lichts in Abhängigkeit der Objektposition. Dabei entsprechen die auf den Abszissen aufgetragenen %-Angaben den oben in Bezug auf Fig. 5 beschriebenen Objektpositionen. Auf den Ordinaten sind jeweils die empfangenen Energien in beliebigen Einheiten aufgetragen, wie nachfolgend im Einzelnen erläutert wird.

Wie bereits erwähnt, wird hier eine Situation betrachtet, bei der auf dem Empfänger 314 bei nicht vorhandenem Objekt ein schwaches Hintergrundsignal vorliegt, das bei Einfahren des Objektes 320 in Förderrichtung F auf ein starkes Vordergrundsignal ansteigt. Die punktierte Kurve 610 zeigt dabei die Energie des ersten Empfangslichtspots 318-1, die dem ersten Sendelichtstrahl 322-1 zugeordnet ist. Die gestrichelte Kurve 612 zeigt die Energie des zweiten Empfangslichtspots 318-2, die dem zweiten Sendelichtstrahl 322-2 zugeordnet ist, und die durchgezogene Kurve 614 den des dritten Empfangslichtspots 318-3. Zusätzlich erzeugt die Auswerteeinheit 316 noch ein mean-Signal 616 (strich-punktiert), das den Mittelwert der Kurven 610 und 614 bildet und somit ein Verknüpfungsergebnis der Werte der Kurven 610 und 614 darstellt.

Damit lässt sich eine einfache Schaltbedingung definieren, nämlich der Sensor 300 schaltet dann, wenn die Differenz, also das Vergleichsergebnis, zwischen der Energie des Empfangslichtspots 318-2 (also des zweiten Empfangssignals) und dem mean-Signal 616 einen vordefinierten Schwellwert überschreitet, hier wäre das Null, also wenn der Kreuzungspunkt der Kurven 612 und 616 überschritten wird. Der Sensor 300 schaltet somit ein (gibt also ein Objektfeststellungssignal aus), wenn die Energie des zweiten Empfangssignals (Kurve 612) größer ist als das Verknüpfungsergebnis (mean-Signal 616) bzw. schaltet aus, wenn die Energie des zweiten Empfangssignals 612 kleiner ist.

Unabhängig von der Helligkeit des Objektes 320, also unabhängig vom Reflexionsgrad des Objekts 320, schaltet der Sensor 300 dann immer bei der relativen Position 50%.

Diese beschriebene Ausführungsform ist nur einsetzbar, wenn das Vordergrundsignal immer stärker ist als das Hintergrundsignal. Durch eine kleine Abwandlung ist der Sensor 300 aber auch einsetzbar, wenn das Vordergrundsignal immer schwächer ist als das Hintergrundsignal. Dann liegt nämlich die in Fig. 7 dargestellte Situation vor. Die entsprechenden Kurven 710, 712 und 714 fallen dann von dem starken Hintergrundsignal bei 0% in analoger Weise auf das schwächere Vordergrundsignal bei 100% ab. Wenn jetzt das Signal 712, also das zweite Empfangssignal und das mean-Signal 716 in der Auswertung invertiert werden, schaltet der Sensor 300 dann bei der gleichen Schaltbedingung (zweites Empfangssignal > mean) wie zuvor.

Die bis jetzt beschriebenen Ausführungsformen nach Fig. 3 bis 7 funktionieren nicht mehr, wenn das Hintergrundsignal so groß ist wie das Vordergrundsignal.

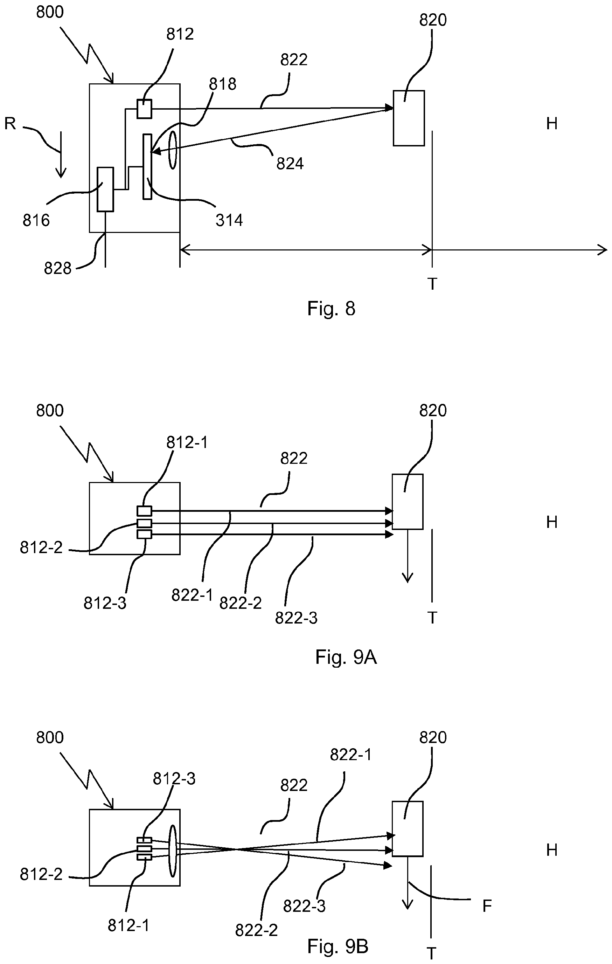

Deshalb ist eine weitere Ausführungsform 800 vorgesehen, wie sie in Fig. 8 ff dargestellt ist. Der grundsätzliche Aufbau dieser Ausführungsform des erfindungsgemäßen Sensors ist in Fig. 8 dargestellt und ist ähnlich dem aus dem Stand der Technik unter Bezugnahme auf Fig. 1 erläuterten.

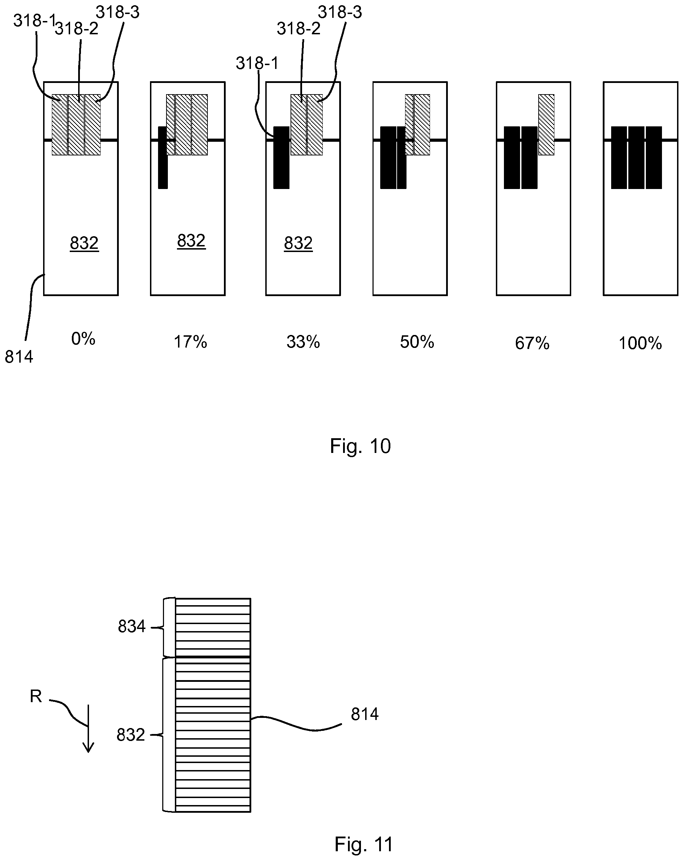

Der Sensor 800 umfasst eine Lichtsendevorrichtung 812 zum Erzeugen von Sendelicht 822, das einen Detektionsbereich definiert. Der Sensor 800 ist jetzt als Triangulationssensor ausgebildet und weist einen Empfänger 814 auf, der zumindest in eine Triangulationsrichtung R ortsauflösend ausgebildet ist (Fig. 11), so dass ein Empfangslichtspot 818 einem Nahbereich 832 zugeordnet werden kann, wenn es von einer Reflexion innerhalb einer Tastweite T stammt und einem Fernbereich 834 zugeordnet werden kann, wenn es von einer Reflexion außerhalb der Tastweite T stammt. Nahbereich 832 und Fernbereich 834 sind durch einen Trennsteg 830 getrennt, der genau die Tastweite T definiert. Wie eine solche Trennung auf einem ortsauflösenden Empfänger 814 erfolgen kann, ist beispielsweise in der DE 197 21 105 C5 beschrieben.

Der Empfänger 814 erfasst die Reflexionen des Sendelichts 822 als Empfangslicht 824. In einer Auswerteeinheit 816 werden schließlich die Empfangssignale ausgewertet und an einem Ausgang 828 in Abhängigkeit des Auswerteergebnisses ein Objektfeststellungssignal ausgegeben. Ein Objektfeststellungssignal wird dann ausgegeben, wenn sich ein Objekt 820 innerhalb der Tastweite T im Detektionsbereich befindet, wenn also der Schwerpunkt der auf dem Empfänger empfangenen Lichtenergie auf dem Nahbereich 832 liegt.

Die Lichtsendevorrichtung 812 mit drei Lichtsendern 812-1, 812-2 und 812-3 kann wie in dem ersten Ausführungsbeispiel (siehe Fig. 4A und 4B) ausgeführt sein, was in Fig. 9A und 9B dargestellt ist.

Die Abfolge, wenn dass Objekt 820 in den Detektionsbereich einfährt bzw. gefördert wird, ist wieder anhand einzelner Bilder in Fig. 10 schematisch dargestellt, analog wie in Fig. 2 und 5. Die einzelnen Bilder zeigen wieder die Empfangslichtspots 818-1, 818-2 und 818-3 in Abhängigkeit der Objektposition, also wie weit des Objekt in den Detektionsbereich eingefahren ist. Dabei sind die Bilder wiederum mit Prozentangaben gekennzeichnet.

Die in Fig. 10 dargestellten Empfangslichtspots 818-1, 818-2 und 818-3 sind der einfacheren Darstellung wegen wieder rechteckig dargestellt.

Wenn noch kein Objekt 820 vorhanden ist (Objektposition 0%), dann liegt der Schwerpunkt aller drei Empfangslichtspots im Fernbereich 834. Fährt das Objekt 820 innerhalb der Tastweite T zur Hälfte in den ersten Sendelichtstrahl 822-1 seitlich ein, dann trifft die Hälfte des ersten Sendelichtstrahls 822-1 das Objekt 820 und die Hälfte des ersten Empfangslichtspots 818-1 wird mehr in den Nahbereich 832 verschoben abgebildet. Wenn die Sendelichtstrahlen gleichen Querschnitt haben, wird das Objekt 820 zu 1/6-tel, also zu 17%, von dem Sendelicht 822 getroffen (Bild 17%). Bei Objektposition 33% der Fig. 10 trifft bereits der gesamte erste Sendelichtstrahl 822-1 das Objekt 820. Entsprechend der Entfernung Objekt-Sensor ist der erste Empfangslichtlichtspot 818-1 auf dem Empfänger 814 gegenüber den beiden anderen Lichtspots 818-2 und 818-3, die von Licht aus dem Hintergrund stammen, in Richtung Nahbereich 832 verschoben. Fährt das Objekt 820 weiter ein, dann wird der Teil des Sendelichts 822, der das Objekt 820 trifft, immer größer. Bei 67% ist die Situation dargestellt, wenn der erste und zweite Sendelichtstrahl 822-1 und 822-2 das Objekt 820 treffen. Schließlich ist das Objekt 820 so weit eingefahren, dass alles Sendelicht 822 das Objekt 820 trifft und alle drei Empfangslichtspots 818-1, 818-2 und 818-3 verschoben sind, so dass ihre Schwerpunkte im Nahbereich 832 liegen.

Die Erfindung geht davon aus, dass die einzelnen Empfangslichtspots 818-1, 818-2 bzw. 818-3 jeweils den Sendelichtstrahlen 822-1, 822-2 bzw. 822-3 zugeordnet sind. Dies ist geometrisch und anhand der Figuren leicht zu erkennen. Damit auch die Auswertung diese Zuordnung machen kann, wenn der Empfänger 814 ein einfaches Zeilenarray ist, wie in Fig. 11 dargestellt, werden die drei Lichtsender 812-1, 812-2 und 812-3 bevorzugt gepulst und zeitversetzt betrieben, so dass immer nur einer der drei Sender aktiv ist, während die beiden anderen nicht aktiv sind. Die Steuerung der Sender und Zuordnung zu den Empfangssignalen übernimmt die Auswerteeinheit 816. Alternativ könnte der Empfänger auch als zweidimensionales Fotodiodenarray ausgebildet sein, so dass die Trennung der Lichtstrahlen und Zuordnung zu den Empfangssignalen geometrisch erfolgen kann. Dann dürfen die Empfangslichtspots 818-1, 818-2 und 818-3 sich aber nicht überlappen.

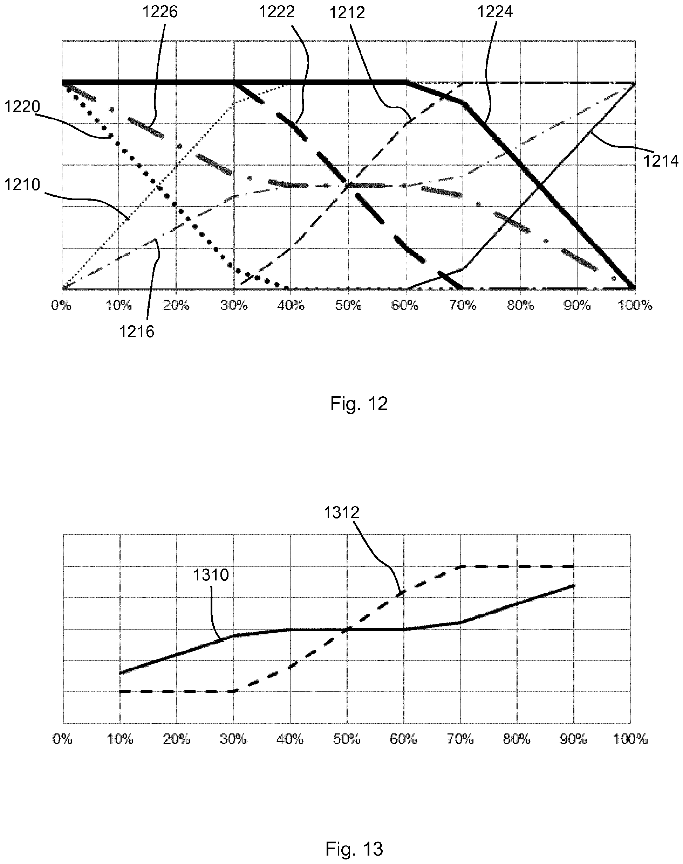

Der erfindungsgemäße Sensor 800 arbeitet nun wie nachfolgend anhand der Diagramme 12 bis 19 erläutert. Die Diagramme 12, 14 und 16 zeigen jeweils Energien und Energiedifferenzen des auf den Empfänger 814 auftreffenden Lichts in Abhängigkeit der Objektposition für verschiedene Situationen. Dabei entsprechen die auf den Abszissen aufgetragenen %-Angaben den oben in Bezug auf Fig. 10 beschriebenen Objektpositionen. Auf den Ordinaten sind jeweils im Nahbereich 832 bzw. im Fernbereich 834 des Empfängers 814 empfangene Energien oder Energiedifferenzen davon in beliebigen Einheiten aufgetragen, wie nachfolgend im Einzelnen erläutert wird. Die Fig. 13, 15 bzw. 17 zeigen Verknüpfungsergebnisse von Verknüpfungen der Werte aus den Fig. 12, 14 bzw. 16 ebenfalls in Abhängigkeit der Objektposition.

Da diese Ausführungsform auch den Spezialfall abdecken soll, wenn das Hintergrundsignal so groß ist wie das Vordergrundsignal, wird zunächst dieser Fall betrachtet.

Fig. 12 zeigt in einer dünn punktierten Kurve 1210 die Energie des ersten Empfangslichtspots 818-1 auf dem Nahbereich 832 (erstes Nahbereichsempfangssignal), die dem Licht des ersten Sendelichtstrahls 822-1 zugeordnet ist. Die dünn gestrichelte Kurve 1212 zeigt die Energie des zweiten Empfangslichtspots 818-2 auf dem Nahbereich 832 (zweites Nahbereichsempfangssignal), die dem Licht des zweiten Sendelichtstrahls 822-2 zugeordnet ist, und die dünne durchgezogene Kurve 1214 den des dritten Empfangslichtspots 818-3 auf dem Nahbereich 832 (drittes Nahbereichsempfangssignal).

Analog zeigen die fetten Kurven die Energien auf dem Fernbereich 834. Also die fett punktierte Kurve 1220 die Energie des ersten Empfangslichtspots 818-1 auf dem Fernbereich 834 (erstes Fernbereichsempfangssignal), die fett gestrichelte Kurve 1222 die Energie des zweiten Empfangslichtspots 818-2 (zweites Fernbereichsempfangssignal) und die fette durchgezogene Kurve 1224 den des dritten Empfangslichtspots 818-3 (drittes Fernbereichsempfangssignal).

Die dünne strich-punktierte Kurve 1216 zeigt ein Nahbereichsverknüpfungsergebnis, nämlich einen Mittelwert mean-nah der ersten und dritten Nahbereichsempfangssignale, also der Kurven 1210 und 1214, und die fette strich-punktierte Kurve 1226 zeigt ein Fernbereichsverknüpfungsergebnis, nämlich den Mittelwert mean-fern der Fernbereichsempfangssignale, also der Kurven 1220 und 1224.

In Fig. 13 zeigt die durchgezogene Kurve 1310 ein Gesamtverknüpfungsergebnis, das der Differenz von Nahbereichsverknüpfungsergebnis und Fernbereichsverknüpfungsergebnis entspricht. Die gestrichelte Kurve 1312 gibt einen aus den zweiten Empfangssignalen abgeleiteten Wert an, nämlich die Differenz zwischen dem zweiten Nahbereichsempfangssignal und dem zweiten Fernbereichsempfangssignal.

Wie in Fig. 13 gut zu erkennen ist, kreuzen sich die Kurven 1310 und 1312, so dass dieser Kreuzungspunkt wieder die Schaltbedingung definiert. Es werden also das Gesamtverknüpfungsergebnis mit dem abgeleiteten Wert verglichen und wenn dieser Vergleich größer Null ist, wird ein Objektfeststellungssignal ausgegeben. Damit liegt der Schaltpunkt wieder genau bei 50% und wieder unabhängig von äußeren Bedingungen.

Eine Situation, die zu Verhältnissen führt, die in den Fig. 12 und 13 dargestellt sind, hatte einerseits die Voraussetzung, dass Hintergrund und Vordergrundsignal gleich sind und andererseits liegen die Empfangslichtspots voll im Fernbereich, wenn nur Hintergrundlicht vorhanden ist (Energie ist 0 im Nahbereich bei Objektposition 0%) oder voll im Nahbereich, wenn das Objekt voll im Sendelicht liegt (Energie ist 0 im Fernbereich bei Objektposition 100%).

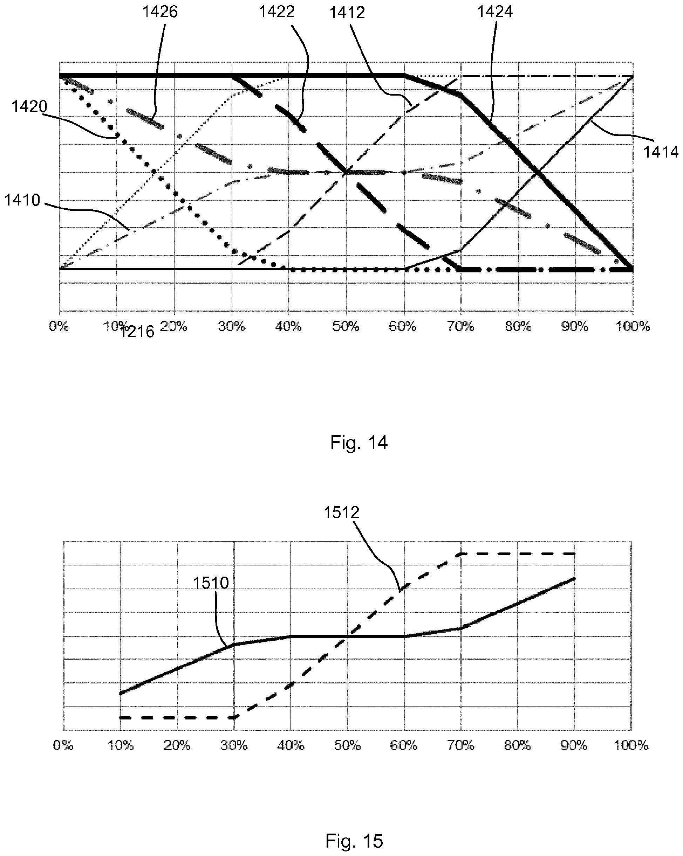

Die Fig. 14 und 15 zeigen prinzipiell die gleichen Kurven wie Fig. 12 und 13. Allerdings liegen hier die Empfangslichtspots 818-1, 818-2 und 818-3 nicht vollständig in Nah- bzw. Fernbereich. So ist gemäß Fig. 14 bei der Objektposition 0% ein Signal ungleich Null auf dem Nahbereich und bei Objektposition 100% ein Signal ungleich Null auf dem Fernbereich. Aber auch in dieser Situation zeigt Fig. 15, dass die Kurven 1510 und 1512 (die das Analoge darstellen wie die Kurven 1310 und 1312) sich kreuzen und somit ein Schaltpunkt auch für diese realistischere Situation definiert werden kann.

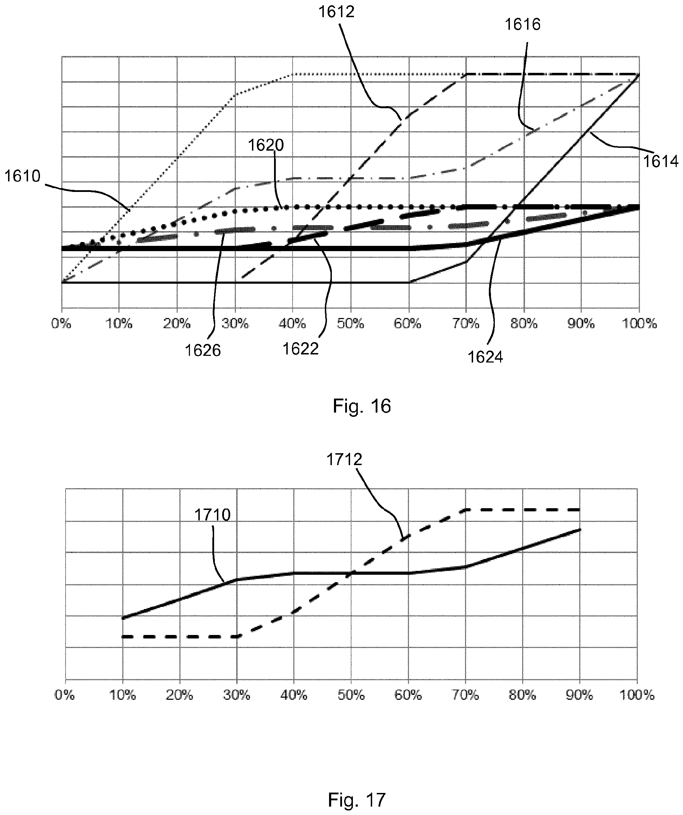

Gleiches gilt für die Situation, wenn Hintergrundsignal und Vordergrundsignal unterschiedlich sind. Diese Situation ist exemplarisch in Fig. 16 dargestellt. Hier liegt bei Objektposition 0% ein kleines Hintergrundsignal auf dem Fernbereich und ein noch kleineres auf dem Nahbereich. Bei Objektposition 100% liegt ein sehr hohes Signal auf dem Nahbereich und ein kleineres auf dem Fernbereich, das aber immer noch höher ist als alle Signal bei Objektposition 0%. Wie die Fig. 17 zeigt, die das entsprechende Gesamtverknüpfungsergebnis in Kurve 1710 und den entsprechenden aus den zweiten Empfangssignalen abgeleiteten Wert in Kurve 1712 darstellt, funktioniert das Verfahren auch in dieser Situation und es kann eine Schaltbedingung abgeleitet (Kreuzungspunkt) abgeleitet werden.

Das erfindungsgemäße Verfahren funktioniert also in jeder erdenklichen Situation. Gegebenenfalls müssen bei der Verknüpfung oder Differenzbildung Vorzeichen beachtet werden, wodurch z.B. die Objektdetektion unabhängig davon gemacht werden kann, ob ein Objekt von der einen oder anderen Seite einfährt.

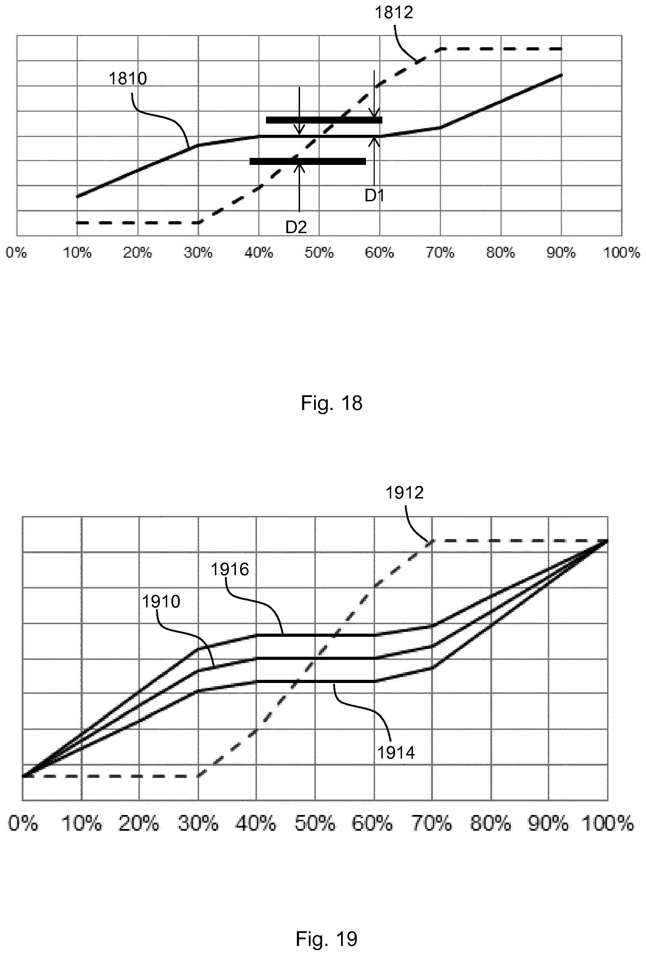

In einer weiteren Ausführungsform der Erfindung ist eine Schalthysterese vorgesehen (Fig. 18). Dies kann so realisiert sein, dass z.B. bei ausgeschaltetem Ausgang 828, also "kein Objektfeststellungssignal", der Ausgang erst einschaltet, also ein Objektfeststellungssignal ausgibt, wenn der abgeleitete Wert 1312, 1512 bzw. 1712, der in Fig. 18 exemplarisch als Kurve 1810 dargestellt ist, um eine Mindestdifferenz D1 größer ist als das Gesamtverknüpfungsergebnis 1310, 1510 bzw. 1712, exemplarisch durch Kurve 1812 dargestellt; oder wenn bei eingeschaltetem Ausgang 828, also "Objektfeststellungssignal vorhanden", der Ausgang erst ausschaltet, also "kein Objektfeststellungssignal" ausgibt, wenn der abgeleitete Wert 1312, 1512 bzw. 1712 um eine Mindestdifferenz D2 kleiner ist als das Gesamtverknüpfungsergebnis 1310, 1310 bzw. 1710.

In einer weiteren Ausbildung können die Empfangssignale bei der Verknüpfung gewichtet werden, also den ersten Empfangssignalen (auf dem Nah- bzw. Fernbereich) ein anderes Gewicht gegeben werden als den dritten. Damit lässt sich der Schaltpunkt von der bisher beschriebenen Objektposition 50% auf andere Objektpositionen verschieben.

Wenn man die Gewichtung abhängig vom Schaltzustand des Ausgangs 828 macht, kann somit eine besonders vorteilhafte geometrische Hysterese realisiert werden. Dies ist grafisch in Fig. 19 qualitativ dargestellt, wobei 1910 eine Kurve der abgeleiteten Werte ohne Gewichtung darstellt, wie sie bereits in vorherigen Beispielen beschrieben war. Die Kurven 1914 und 1916 zeigen jetzt zwei verschiedene Gewichtungen zur Bildung der Hysterese.

Wie bereits beschrieben, ist es vorteilhaft, wenn die Sendelichtstrahlen gepulst ausgesandt werden. Dann ist es vorteilhaft, erst dann das Objektfeststellungssignal auszugeben, wenn mehrere Messungen, also nach mehreren Pulsen, die Schaltbedingung bestätigen. Beispielsweise gibt der Sensor dann ein Objektfeststellungssignal aus, wenn dreimal hintereinander die Schaltbedingung als erfüllt erkannt wurde (3-Bit-Auswertung, Majoritätsauswertung). Dadurch kann eine höhere Störsicherheit erreicht werden.

Vorteilhaft kann auch polarisiertes Licht verwendet werden. Dazu ist im Sendekanal ein Polfilter vorgesehen, der das Sendelicht polarisiert und in 90° gedrehter Anordnung dazu vor dem Empfänger ein weiterer Polfilter angebracht. Dadurch kann insbesondere bei stark reflektierenden Objekten vermieden werden, dass eine Spiegelung im Randbereich eines Objekts zu Schwankungen der Schaltposition führt.

## Patentansprüche

1. Verfahren zur ortsgenauen Detektion entlang einer Förderrichtung (F) eines relativ zu einem Sensor (300; 800) in die Förderrichtung (F) geförderten Objekts (320; 820) mit den Schritten:
- Fördern des Objekts (320; 820) durch einen Detektionsbereich des Sensors (300; 800) und während des Förderns wiederholtes Durchführen folgender Schritte an einer aktuellen Objektposition in Förderrichtung:
- Erzeugen von Sendelicht (322; 822) bestehend aus drei Sendelichtstrahlen (322-1, 322-2, 322-3; 822-1, 822-2, 822-3), die derart angeordnet bzw. ausgerichtet sind, dass sie das Objekt (320; 820) an drei in Förderrichtung (F) beabstandeten Positionen treffen, so dass bei Fördern des Objekts (320; 820) das Objekt (320; 820) zunächst vom ersten (322-1; 822-1), dann vom zweiten (322-2; 822-2) und schließlich vom dritten (322-3; 822-3) Sendelichtstrahl getroffen wird,
- Reflektieren des Sendelichts (322; 822) an dem geförderten Objekt (320; 820) oder bei Nichtvorhandensein des Objekts (320; 820) gegebenenfalls an einem Hintergrund (H),
- Erfassen der den Sendelichtstrahlen (322-1, 322-2, 322-3; 822-1, 822-2, 822-3) zugeordneten Reflexionen des Lichts als Empfangslichtspots (318-1, 318-2, 318-2; 818-1, 818-2; 818-3) und Erzeugen von den Sendelichtstrahlen (322-1, 322-2, 322-3; 822-1, 822-2, 822-3) zugeordneten ersten (610; 710; 1210, 1220; 1410, 1420; 1610, 1620), zweiten (612; 712; 1212, 1222; 1412, 1422; 1612, 1622) und dritten Empfangssignalen (614; 714; 1214, 1224; 1414, 1424; 1614, 1626) mit wenigstens einem Empfänger (314; 814),
- Verknüpfen der ersten und dritten Empfangssignale (610 und 614; 710 und 714; 1210 und 1214, 1220 und 1224) zu einem Verknüpfungsergebnis (616; 716; 1216, 1226, 1310; 1510; 1710),
- Vergleichen des Verknüpfungsergebnisses (616; 716; 1216, 1226, 1310; 1510; 1710) mit dem zweiten Empfangssignal (612; 712) oder einem aus dem zweiten Empfangssignal (1212, 1222; 1412, 1422; 1612, 1622) abgeleiteten Wert (1312; 1512; 1712) zu einem Vergleichsergebnis,
- Ausgeben eines Objektfeststellungssignals wenn das Vergleichsergebnis einen Schwellwert über- oder unterschreitet.

2. Verfahren nach Anspruch 1, **dadurch gekennzeichnet, dass** das Verknüpfen eine Mittelwertbildung ist.

3. Verfahren nach einem der vorhergehenden Ansprüche, **dadurch gekennzeichnet,**
- **dass** der Sensor nach dem Prinzip der Triangulation arbeitet und die drei Empfangslichtspots jeweils in eine Triangulationsrichtung ortsaufgelöst erfasst werden, so dass ein Empfangssignal einem Nahbereich zugeordnet wird, wenn es von einer Reflexionen innerhalb einer Tastweite stammt und einem Fernbereich zugeordnet wird, wenn es von einer Reflexion außerhalb der Tastweite stammt, so dass jedem Empfangslichtspot ein Nahbereichsempfangssignal und ein Fernbereichsempfangssignal zugeordnet sind
- und **dass** die ersten und dritten Nahbereichsempfangssignale zu einem Nahbereichsverknüpfungsergebnis und die ersten und dritten Fernbereichsempfangssignale zu einem Fernbereichsverknüpfungsergebnis verknüpft werden und diese zu einem Gesamtverknüpfungsergebnis verknüpft werden,
- und **dass** der aus dem zweiten Empfangssignal abgeleitete Wert eine Differenz zwischen dem zweiten Nahbereichs- und dem zweiten Fernbereichsempfangssignal ist.

4. Verfahren nach Anspruch 3, **dadurch gekennzeichnet, dass** das Nahbereichsverknüpfungsergebnis und das Fernbereichsverknüpfungsergebnis jeweils Mittelwertbildungen sind und diese mittels Differenzbildung zu dem Gesamtverknüpfungsergebnis führen.

5. Verfahren nach einem der vorhergehenden Ansprüche, **dadurch gekennzeichnet, dass** eine Objektfeststellungssignalschalthysterese vorgesehen ist.

6. Verfahren nach einem der vorhergehenden Ansprüche, **dadurch gekennzeichnet, dass** der Empfänger auch senkrecht zur Triangulationsrichtung die Auftreffpunkte der Empfangslichtspots auflösen kann.

7. Verfahren nach einem der vorhergehenden Ansprüche, **dadurch gekennzeichnet, dass** die Empfangssignale gewichtet werden.

8. Verfahren nach Anspruch 6, **dadurch gekennzeichnet, dass** die Gewichtung abhängig ist vom Vorzeichen des Gesamtverknüpfungsergebnisses (Schaltzustand).

9. Sensor zur Durchführung eines Verfahrens nach einem der vorhergehenden Ansprüche zur ortsgenauen Detektion entlang einer Förderrichtung (F) eines relativ zum Sensor (300; 800) in die Förderrichtung (F) geförderten Objekts (320; 820), mit:
- einer Lichtsendevorrichtung (312; 812) zum Erzeugen von Sendelicht (322; 822) bestehend aus drei Sendelichtstrahlen (322-1, 322-2, 322-3; 822-1, 822-2, 822-3), deren optische Achsen in Förderrichtung (F) einen Abstand haben, so dass bei Fördern des Objekts (320; 820) das Objekt zunächst vom ersten (322-1; 822-1), dann vom zweiten (322-2; 822-2) und schließlich vom dritten (322-3; 822-3) Sendelichtstrahl getroffen wird,
- einem Empfänger (314; 814) zum Erfassen von Reflexionen des Sendelichts (322; 822) an dem geförderten Objekt (320; 820) oder bei Nichtvorhandensein des Objekts gegebenenfalls an einem Hintergrund (H),
- und zum Erfassen der den Sendelichtstrahlen (322-1, 322-2, 322-3; 822-1, 822-2, 822-3) zugeordneten Reflexionen des Lichts als Empfangslichtspots (318-1, 318-2, 318-2; 818-1, 818-2; 818-3) und Erzeugen von den Sendelichtstrahlen (322-1, 322-2, 322-3; 822-1, 822-2, 822-3) zugeordneten ersten (610; 710; 1210, 1220; 1410, 1420; 1610, 1620), zweiten (612; 712; 1212, 1222; 1412, 1422; 1612, 1622) und dritten (614; 714; 1214, 1224; 1414, 1424; 1614, 1626) Empfangssignalen,
- einer Auswerteeinheit (316; 816) mit
- ersten Mitteln zum Verknüpfen der ersten und dritten Empfangssignale (610 und 614; 710 und 714; 1210 und 1214, 1220 und 1224) zu einem Verknüpfungsergebnis (616; 716; 1216, 1226, 1310; 1510; 1710),
- mit zweiten Mitteln zum Vergleichen des Verknüpfungsergebnisses (616; 716; 1216, 1226, 1310; 1510; 1710) mit dem zweiten Empfangssignal (612; 712) oder einem aus dem zweiten Empfangssignal (1212, 1222; 1412, 1422; 1612, 1622) abgeleiteten Wert (1312; 1512; 1712) zu einem Vergleichsergebnis,
- einem Ausgang (328; 828) zum Ausgeben eines Objektfeststellungssignals, wenn der Vergleich einen Schwellwert über- oder unterschreitet.

10. Sensor nach Anspruch 9, **dadurch gekennzeichnet, dass** der Sensor als Triangulationssensor ausgebildet ist und der Empfänger die drei Empfangslichtspots jeweils in eine Triangulationsrichtung ortsaufgelöst erfasst, so dass ein Empfangssignal einem Nahbereich zugeordnet wird, wenn es von einer Reflexionen innerhalb einer Tastweite stammt und einem Fernbereich zugeordnet wird, wenn es von einer Reflexion außerhalb der Tastweite stammt, so dass jedem Empfangslichtspot ein Nahbereichsempfangssignal und ein Fernbereichsempfangssignal zugeordnet sind, und dass die ersten Mittel ausgebildet sind, die ersten und dritten Nahbereichsempfangssignale zu einem Nahbereichsverknüpfungsergebnis und die ersten und dritten Fernbereichsempfangssignale zu einem Fernbereichsverknüpfungsergebnis zu verknüpfen und diese zu einem Gesamtverknüpfungsergebnis zu verknüpfen, und Mittel aufweist zum Erzeugen des aus dem zweiten Empfangssignal abgeleiteten Wertes, der eine Differenz zwischen dem zweiten Nahbereichs- und dem zweiten Fernbereichsempfangssignal ist.

11. Sensor nach Anspruch 9 oder 10, **dadurch gekennzeichnet, dass** der Empfänger als Fotodiodenzeile ausgebildet ist.

12. Sensor nach Anspruch 9 oder 10, **dadurch gekennzeichnet, dass** der Empfänger als zweidimensionales Lichtempfangsarray ausgebildet ist.

13. Sensor nach einem der vorhergehenden Ansprüche 9 bis 12, **dadurch gekennzeichnet, dass** die Lichtsendevorrichtung gepulst betreibbar ist und der Abstand zwischen Sendelichtpulsen variabel ist.

14. Sensor nach einem der vorhergehenden Ansprüche 9 bis 13, **dadurch gekennzeichnet, dass** die Lichtsendevorrichtung und der Empfänger je einen Polarisationsfilter aufweisen, deren Polarisationsrichtungen gegeneinander um 90° verdreht sind.

## Claims

1. A method for the location-accurate detection along a conveying direction (F) of an object (320; 820) conveyed relative to a sensor (300; 800) in the conveying direction (F) comprising the steps of:
- conveying the object (320; 820) through a detection region of the sensor (300; 800) and repeatedly performing the following steps at a current object position in the conveying direction during the conveying:
- generating transmitted light (322; 822) consisting of three transmitted light beams (322-1, 322-2, 322-3; 822-1, 822-2, 822-3) which are arranged or directed in such a way that they hit the object (320; 820) at three positions spaced apart in conveying direction so that when conveying the object (320; 820) the object (320; 820) is first struck by the first (322-1; 822-1), then by the second (322-2; 822-2) and finally by the third (322-3; 822-3) transmission light beam,
- reflecting the transmitted light (322; 822) at the conveyed object (320; 820) or, in the absence of the object (320; 820), optionally at a background (H),
- detecting the reflections of the light associated with the transmitted light beams (322-1, 322-2, 322-3; 822-1, 822-2, 822-3) as receiving light spots (318-1, 318-2, 318-2; 818-1, 818-2; 818-3) and generating with at least one receiver (314; 814) first reception signals (610; 710; 1210, 1220; 1410, 1420; 1610, 1620), second reception signals (612; 712; 1212, 1222; 1412, 1422; 1612, 1622) and third reception signals (614; 714; 1214, 1224; 1414, 1424; 1614, 1626) correlated to the transmitted light beams (322-1, 322-2, 322-3; 822-1, 822-2, 822-3), respectively,
- combining the first and third received signals (610 and 614; 710 and 714; 1210 and 1214, 1220 and 1224) to form a combination result (616; 716; 1216, 1226, 1310; 1510; 1710),
- comparing the combination result (616; 716; 1216, 1226, 1310; 1510; 1710) with the second received signal (612; 712) or a value (1312; 1512; 1712) derived from the second received signal (1212, 1222; 1412, 1422; 1612, 1622) to form a comparison result,
- output of an object detection signal if the comparison result exceeds or falls below a threshold value.

2. A method according to claim 1, **characterized in that** the combination is averaging.

3. A method according to any of the foregoing claims, **characterized,**
- **in that** the sensor operates according to the principle of triangulation and the three received light spots are each detected with spatial resolution in a triangulation direction, so that a received signal is assigned to a near range if it originates from a reflection within a scanning range and is assigned to a far range if it originates from a reflection outside the scanning range, so that a close range received signal and a far range received signal are assigned to each received light spot,
- and **in that** the first and third short-range reception signals are combined to form a short-range combination result and the first and third long-range reception signals are combined to form a long-range combination result and these are combined to form an overall combination result,
- and that the value derived from the second received signal is a difference between the second near range and the second far range received signal.

4. Method according to claim 3, **characterized in that** the short-range combination result and the long-range combination result are in each case mean value formations and lead to the overall combination result by means of difference formation.

5. Method according to one of the preceding claims, **characterized in that** an object detection signal hysteresis is provided.

6. Method according to one of the preceding claims, **characterized in that** the receiver can also resolve the impact points of the received light spots perpendicularly to the triangulation direction.

7. Method according to one of the preceding claims, **characterized in that** the received signals are weighted.

8. Method according to Claim 6, **characterized in that** the weighting is dependent on the sign of the overall combination result (switching state).

9. A sensor for carrying out a method according to one of the preceding claims for the location-accurate detection along a conveying direction (F) of an object (320; 820) conveyed relative to the sensor (300; 800) in the conveying direction (F), comprising:
- a light transmitting device (312; 812) for generating transmitting light (322; 822), comprising three transmitting light beams (322-1, 322-2, 322-3; 822-1, 822-2, 822-3), the optical axes of which are spaced apart in the conveying direction (F) in such a way that, when the object (320; 820) is conveyed, the object is struck first by the first transmitting light beam (322-1; 822-2), then by the second transmitting light beam (322-2; 822-2) and finally by the third transmitting light beam (322-3; 822-3),
- a receiver (314; 814) for detecting reflections of the transmitted light (322; 822) at the conveyed object (320; 820) or, in the absence of the object, optionally at a background (H),
- and for detecting the reflections of the light associated with the transmitted light beams (322-1, 322-2, 322-3; 822-1, 822-2, 822-3) as receiving light spots (318-1, 318-2, 318-2; 818-1, 818-2; 818-3) and generating first (610; 710; 1210, 1220; 1410, 1420; 1610, 1620), second (612; 712; 1212, 1222; 1412, 1422; 1612, 1622) and third (614; 714; 1214, 1224; 1414, 1424; 1614, 1626) received signals associated with the transmitted light beams (322-1, 322-2, 322-3); 822-1, 822-2, 822-3), respectively,
- an evaluation unit (316; 816) with
- first means for combining the first and third received signals (610 and 614; 710 and 714; 1210 and 1214, 1220 and 1224) into a combination result (616; 716; 1216, 1226, 1310; 1510; 1710),
- second means for comparing the combination result (616; 716; 1216, 1226, 1310; 1510; 1710) with the second received signal (612; 712) or a value (1312; 1512; 1712) derived from the second received signal (1212, 1222; 1412, 1422; 1612, 1622) to form a comparison result,
- an output (328; 828) for outputting an object detection signal when the comparison exceeds or falls below a threshold value.

10. Sensor according to claim 9, **characterized in that** the sensor is designed as a triangulation sensor and the receiver detects the three received light spots in each case with spatial resolution in a triangulation direction, so that a received signal is assigned to a near region if it originates from a reflection within a scanning range and is assigned to a far region if it originates from a reflection outside the scanning range, so that a near region received signal and a far region received signal are assigned to each received light spot, and **in that** the first means are arranged to combine the first and third near-range reception signals into a near-range combination result and the first and third far-range reception signals into a far-range combination result and to combine them into an overall combination result, and has means for generating the value derived from the second reception signal which is a difference between the second near-range and the second far-range reception signal.

11. Sensor according to claim 9 or 10, **characterized in that** the receiver is designed as a photodiode row.

12. Sensor according to claim 9 or 10, **characterized in that** the receiver is designed as a two-dimensional light-receiving array.

13. Sensor according to one of the preceding claims 9 to 12, **characterized in that** the light transmitting device can be operated in pulsed mode and the distance between transmitted light pulses is variable.

14. Sensor according to one of the preceding claims 9 to 13, **characterized in that** the light-transmitting device and the receiver each have a polarization filter whose polarization directions are rotated relative to one another by 90°.

## Revendications

1. Procédé pour la détection précise de l'emplacement le long d'une direction de transport (F) d'un objet (320 ; 820) transporté par rapport à un capteur (300 ; 800) dans la direction de transport (F) comprenant les étapes consistant à :
- transporter l'objet (320 ; 820) à travers une zone de détection du capteur (300 ; 800) et l'exécution répétée des étapes suivantes à une position actuelle de l'objet dans la direction de transport pendant le transport :
- générer de la lumière transmise (322 ; 822) constituée de trois faisceaux de lumière transmise (322-1, 322-2, 322-3 ; 822-1, 822-2, 822-3) qui sont disposés ou dirigés de telle sorte qu'ils touchent l'objet (320 ; 820) en trois positions espacées dans la direction de transport de sorte que lors du transport de l'objet (320 ; 820), l'objet (320 ; 820) est d'abord frappé par le premier (322-1 ; 822-1), puis par le deuxième (322-2 ; 822-2) et enfin par le troisième (322-3 ; 822-3) faisceau lumineux de transmission,
- réfléchir la lumière transmise (322 ; 822) sur l'objet transporté (320 ; 820) ou, en l'absence de l'objet (320 ; 820), éventuellement sur un fond (H),
- détecter les réflexions de la lumière associée aux faisceaux lumineux émis (322-1, 322-2, 322-3 ; 822-1, 822-2, 822-2, 822-3) en tant que spots lumineux de réception (318-1, 318-2, 318-2, 318-2 ; 818-1, 818-2 ; 818-3) et générer avec au moins un récepteur (314 ; 814) des signaux premiers (610 ; 710 ; 1210, 1220 ; 1410, 1420 ; 1610, 1620), des deuxièmes signaux de réception (612 ; 712 ; 1212, 1222 ; 1412, 1422 ; 1612, 1622 ; 1612, 1622) et des troisième signaux de réception (614 ; 714 ; 1214, 1224 ; 1414, 1424 ; 1614, 1626) en corrélation avec les faisceaux lumineux émis (322-1, 322-2, 322-3 ; 822-1, 822-2, 822-3), respectivement,
- combiner le premier et troisième signaux reçus (610 et 614 ; 710 et 714 ; 1210 et 1214, 1220 et 1224) pour former un résultat de combinaison (616 ; 716 ; 1216, 1226, 1310 ; 1510 ; 1710 ; 1710),
- comparer le résultat de combinaison (616 ; 716 ; 1216, 1226, 1310 ; 1510 ; 1710 ; 1710) avec le second signal reçu (612 ; 712) ou une valeur (1312 ; 1512 ; 1712 ; 1712) dérivée du second signal reçu (1212, 1222 ; 1412, 1422 ; 1612, 1622) pour obtenir un résultat de comparaison,
- sortie d'un signal de détection d'objet si le résultat de la comparaison dépasse ou tombe en dessous d'une valeur seuil.

2. Procédé selon la revendication 1, **caractérisé en ce que** la combinaison est moyenne.

3. Procédé selon l'une des revendications précédentes, **caractérisé en ce que**,
- le capteur fonctionne selon le principe de la triangulation et les trois spots lumineux reçus sont chacun détectés avec une résolution spatiale dans une direction de triangulation, de sorte qu'un signal reçu est affecté à une portée proche s'il provient d'une réflexion dans une portée de balayage et est affecté à une portée éloignée s'il provient d'une réflexion hors portée de balayage, de sorte que chaque spot lumineux reçu reçoit un signal de faible portée et un signal de grande portée reçu est affecté à chaque spot lumineux reçu,
- et **en ce que** le premier et troisième signaux de réception à courte portée sont combinés pour former un résultat de combinaison à courte portée et le premier et troisième signaux de réception à longue portée sont combinés pour former un résultat de combinaison à longue portée et ceux-ci sont combinés pour former un résultat combiné global,
- et que la valeur dérivée du second signal reçu est une différence entre le second signal reçu de courte portée et le second de longue portée.

4. Procédé selon la revendication 3, **caractérisé en ce que** le résultat de la combinaison à courte portée et le résultat de la combinaison à longue portée sont respectivement des formations de valeurs moyennes et conduisent au résultat global de la combinaison au moyen de la formation de différence.

5. Procédé selon l'une des revendications précédentes, **caractérisé en ce qu'**une hystérésis de signal de détection d'objet est prévue.

6. Procédé selon l'une des revendications précédentes, **caractérisé en ce que** le récepteur peut également résoudre les points d'impact des points lumineux reçus perpendiculairement à la direction de triangulation.

7. Procédé selon l'une des revendications précédentes, **caractérisé en ce que** les signaux reçus sont pondérés.

8. Procédé selon la revendication 6, **caractérisé en ce que** la pondération dépend du signe du résultat global de la combinaison (état de commutation).

9. Capteur pour la mise en oeuvre d'un procédé selon l'une des revendications précédentes pour la détection de localisation précise le long d'une direction de transport (F) d'un objet (320 ; 820) transporté par rapport au capteur (300; 800) dans la direction de transport (F), comprenant :
- un dispositif de transmission de lumière (312 ; 812) pour générer de la lumière de transmission (322 ; 822), comprenant trois faisceaux lumineux de transmission (322-1, 322-2, 322-3 ; 822-1, 822-2, 822-3), dont les axes optiques sont espacés dans la direction de transport (F) de telle manière que, lorsque l'objet (320 ; 820), l'objet est d'abord frappé par le premier faisceau lumineux d'émission (322-1 ; 822-2), puis par le deuxième faisceau lumineux d'émission (322-2 ; 822-2) et enfin par le troisième faisceau lumineux d'émission (322-3 ; 822-3),
- un récepteur (314 ; 814) pour détecter des réflexions de la lumière transmise (322 ; 822) sur l'objet transporté (320 ; 820) ou, en l'absence de l'objet, éventuellement sur un fond (H),
- et pour détecter les réflexions de la lumière associée aux faisceaux lumineux transmis (322-1, 322-2, 322-3 ; 822-1, 822-2, 822-2, 822-3) en tant que spots lumineux de réception (318-1, 318-2, 318-2, 318-2 ; 818-1, 818-2 ; 818-3) et générateurs (610 ; 710 ; 1210, 1220 ; 1410, 1420 ; 1610, 1620), deuxième (612 ; 712 ; 1212, 1222 ; 1412, 1422 ; 1612, 1622 ; 1612, 1622) et troisième (614 ; 714 ; 1214, 1224 ; 1414, 1424 ; 1614, 1614, 1626) reçoivent les signaux associés aux faisceaux lumineux émis (322-1, 322-2, 322-3) ; 822-1, 822-2, 822-3), respectivement,
- une unité d'évaluation (316 ; 816) avec
- un premier moyen pour combiner le premier et troisième signaux reçus (610 et 614 ; 710 et 714 ; 1210 et 1214, 1220 et 1224) en un résultat de combinaison (616 ; 716 ; 1216, 1226, 1310 ; 1510 ; 1710 ; 1710),
- un second moyen pour comparer le résultat de la combinaison (616 ; 716 ; 1216, 1226, 1310 ; 1510 ; 1710 ; 1710) avec le second signal reçu (612 ; 712) ou une valeur (1312 ; 1512 ; 1712 ; 1712) dérivée du second signal reçu (1212, 1222 ; 1412, 1422 ; 1612, 1622) pour obtenir un résultat de comparaison,
- une sortie (328 ; 828) pour délivrer un signal de détection d'objet lorsque la comparaison dépasse ou tombe en dessous d'une valeur seuil.

10. Capteur selon la revendication 9, **caractérisé en ce que** le capteur est conçu comme un capteur à triangulation et le récepteur détecte à chaque fois les trois spots lumineux reçus avec une résolution spatiale dans une direction de triangulation, de sorte qu'un signal reçu est affecté à une région proche s'il provient d'une réflexion dans une zone de balayage et est affecté à une région éloignée s'il provient d'une réflexion hors zone de balayage, de sorte que chaque spot lumineux reçu est affecté à un signal reçu de région proche et à une région éloignée, et **en ce que** les premier et troisième moyens sont agencés pour combiner les premier et troisième signaux de réception à courte portée en un résultat de combinaison à courte portée et les premier et troisième signaux de réception à longue portée en un résultat de combinaison à longue portée et pour les combiner en un résultat de combinaison global, et comporte des moyens pour générer la valeur dérivée du deuxième signal de réception qui est une différence entre le deuxième signal de réception à courte portée et le deuxième signal de réception à longue portée.

11. Capteur selon la revendication 9 ou 10, **caractérisé en ce que** le récepteur est conçu comme une rangée de photodiodes.

12. Capteur selon la revendication 9 ou 10, **caractérisé en ce que** le récepteur est conçu comme un réseau récepteur de lumière bidimensionnel.

13. Capteur selon l'une des revendications précédentes 9 à 12, **caractérisé en ce que** le dispositif de transmission de lumière peut fonctionner en mode pulsé et la distance entre les impulsions lumineuses transmises est variable.

14. Capteur selon l'une des revendications précédentes 9 à 13, **caractérisé en ce que** le dispositif émetteur de lumière et le récepteur comportent chacun un filtre polarisant dont les directions de polarisation sont tournées de 90° l'une par rapport à l'autre.
